# EUROPÄISCHE PATENTANMELDUNG

(11) **EP 0 880 159 A2**
(43) Veröffentlichungstag der Anmeldung: **25.11.1998**
(21) Anmeldenummer: 98810405.5
(22) Anmeldetag: 06.05.1998
(51) Int. Cl.: H01H 71/24, H01H 71/12

(54) **Strombegrenzender Schalter**

(30) Priorität: 23.05.1997 DE 19721591
(71) Anmelder: CMC Carl Maier + Cie AG, 8200 Schaffhausen (CH)
(72) Erfinder: Baiatu, Tudor, Dr., 5200 Brugg (CH); Busenhart, Thomas, 8207 Schaffhausen (CH); Fichthaler, Herbert, 78333 Stockach (DE); Pfister, Jürg, 8215 Hallau (CH)
(74) Vertreter: Kaiser, Helmut

(57) **Zusammenfassung**

Der Schalter dient dem raschen und unter geringer Energieaufnahme erfolgenden Abschalten eines Niederspannungsverbrauchers. Er enthält folgende Bauteile: mindestens eine Schaltstelle (1), ein mit einem beweglichen Kontakt (1a) der Schaltstelle (1) zusammenwirkendes Schaltschloss (8), einen Kurzschlussstromauslöser mit einer Spule (2) und einem Schlaganker (18), welcher einerseits direkt und andererseits über das Schaltschloss (8) auf den beweglichen Kontakt (1a) wirkt, einen mit dem Schaltschloss (8) zusammenwirkenden elektronischen Überstromauslöser (6), einen auf den Überstromauslöser (6) wirkenden Stromsensor (3) und eine den Überstromauslöser (6) mit Energie versorgenden Stromquelle (4). Der Überstromauslöser (6) ist als Datenverarbeitungsvorrichtung ausgebildet und enthält einen Speicher (6a) zur Aufnahme schalterspezifischer, bei der Fertigung des Schalters eingegebener technischer Daten. Der Stromsensor (3) weist zumindest bis zu einem durch den Ansprechwert des Kurzschlusstromauslösers bestimmten Grenzwert eine im wesentlichen lineare Übertragungskennlinie auf.

Der Schalter kann komplizierte Schutzaufgaben rasch und mit guter Genauigkeit lösen. Zudem kann der Schalter leicht gefertigt werden, da für eine grosse Vielfalt von Schaltertypen als Ausgangskomponenten bei der Fertigung lediglich ein einziger Typ von Datenverarbeitungsanlage und einige wenige Typen von Kurzschlussstromauslösern benötigt werden.

## Beschreibung

### TECHNISCHES GEBIET

Bei der Erfindung wird ausgegangen von einem strombegrenzenden Schalter nach dem Oberbegriff von Patentanspruch 1. Ein derartiger Schalter dient als Hochleistungsautomat dem raschen und zuverlässigen Schutz von unter Niederspannung stehenden Leitungen, Motoren, Apparaten und Anlagen vor den Folgen von Überlast- und Kurzschlussströmen. Mit einem Hochleistungsautomaten soll ein Kurzschlussstrom in weniger als einer Halbperiode eines 50 oder 60 Hz betragenden Wechselstroms, typischerweise bereits nach 2 bis 3 ms, abgeschaltet sein. Zugleich darf der bei einer Abschaltung vom Automaten aufgenommene Strom nur einen Bruchteil, typischerweise lediglich ein Viertel oder ein Zehntel des prospektiven, d.h. praktisch unbegrenzten, Kurzschlussstroms betragen.

### STAND DER TECHNIK

Als Hochleistungsautomat ausgeführte Schalter weisen im allgemeinen einen thermischen, vorzugsweise ein Bimetall enthaltenden, und einen elektromagnetischen, vorzugsweise eine Spule und einen Schlaganker enthaltenden, Auslöser aus. Solche Hochleistungsautomaten sind beispielsweise in der Firmenschrift B255 (6.96) "Hochleistungsautomaten S500" der Fa. CMC Carl Maier + Co. Ltd, CH-8201 Schaffhausen/Schweiz beschrieben. Beide Auslöser sind dem Bemessungsstrom und der Auslösekennlinie innerhalb enger Bautoleranzen angepasst. Daher wird ein für zahlreiche Anwendungsmöglichkeiten bestimmtes Sortiment an Hochleistungsautomaten angeboten mit einer hohen Variantenvielfalt an thermischen und elektromagnetischen Auslösern.

Es ist bereits ein strombegrenzender Schalter der gattungsgemässen Art vorgeschlagen worden, bei dem der Überstromauslöser anstelle eines Bimetalls eine elektronische Auswerteeinheit aufweist. Diese Auswerteeinheit wird beim Auftreten von Überströmen und mittlere Kurzschlussströmen angesteuert und wirkt dann über ein Schaltschloss auf eine Schaltstelle des Schalters. Ist diese Auswerteeinheit lediglich für einen einfachen Überlastschutz ausgelegt, so kann die Auswerteeinheit mit dem Strom eines die Überlast- und die Kurzschlussströme detektierenden Stromwandlers versorgt werden. Die Auswerteinheit kann auch einen Mikroprozessor enthalten. Für die Auswerteeinheit wird dann eine zusätzliche Stromversorgung benötigt.

Ein strombegrenzender Schalter mit einem elektronischen Überlastschutz und mit einer Kurzschluss-Auslösespule ist in EP 0 762 590 A1 beschrieben. Eine Schaltstelle dieses Schalters wird entweder von einem dem elektronischen Überlastschutz nachgeschalteten Aktor oder der Auslösespule geöffnet. Je nach erwünschter Anwendung können geeignete geeignete Parameter und Auslösekennlinien in den Überlastschutz abgespeichert werden. Die Typenvielfalt des Schalters kann so drastisch reduziert werden.

### KURZE DARSTELLUNG DER ERFINDUNG

Der Erfindung, wie sie in Patentanspruch 1 angegeben ist, liegt die Aufgabe zugrunde, einen strombegrenzenden Schalter der eingangs genannten Art zu schaffen, welcher trotz einfacher Ausbildung auch komplizierte Schutzaufgaben mit guter Genauigkeit löst.

Der strombegrenzende Schalter nach der Erfindung weist eine Datenverarbeitungsvorrichtung auf sowie einen Sensor, dessen Ausgangssignale wegen seiner linearen Übertragungskennlinie in besonders vorteilhafter Weise an die Arbeitsweise der Datenverarbeitungsvorrichtung angepasst sind. Der Schalter nach der Erfindung kann daher auch komplizierte Schutzaufgaben rasch und mit guter Genauigkeit lösen. Zudem kann der Schalter nach der Erfindung leicht gefertigt werden, da für eine grosse Vielfalt von Schaltertypen als Ausgangskomponenten bei der Fertigung lediglich ein einziger Typ von Datenverarbeitungsvorrichtung und wenige Typen von Kurzschlussstromauslösern benötigt werden. Durch Eingabe schalterspezifischer technischer Daten können so bei der Fertigung die für die vorgesehene technische Anwendung des Schalters, etwa im Geräte-, Motor- oder Leitungsschutz, erforderlichen Auslösecharakteristiken sowie frei definierbare Auslösecharakteristiken, wie etwa thermisch verzögerte Kennlinien und Selektivkennlinien, realisiert werden. Zugleich weist der Schalter nach der Erfindung wegen des Entfallens eines als Bimetall ausgebildeten Überstromauslösers eine geringe Verlustleistung auf und ist die Auslösecharakteristik unabhängig von äusseren Einflüssen, wie insbesondere der Temperatur.

Grosse Linearitätsbereiche weisen in Strom-Spannungswandlern vorgesehene eisenfreie Sekundärspulen, wie insbesondere Rogowskispulen, auf. Solche Sensoren können ein sich über mehrere Grössenordnungen erstreckendes Spektrum von Strömen problemlos detektieren und in Form eines linear abgebildeten Spannungssignals zur direkten Verarbeitung an die Datenverarbeitungsvorrichtung weitergeben. Weitere geeignete Sensoren sind magnetfeldabhängige Sensoren, wie etwa ein Hallelement oder eine als veränderlicher magnetischer Widerstand wirkende magnetische Feldplatte. Diese Sensoren weisen gegenüber einer Rogowskispule die vorteilhafte Besonderheit auf, dass sie Gleichstromkomponenten erfassen können.

Von besonderem Vorteil ist es, dass der strombegrenzende Schalter nach der Erfindung keine zusätzliche Speisequelle zur Versorgung des elektronischen Überstromauslösers benötigt, da durch einen Stromwandler oder einen Abgriffpunkt an stromführenden Pfad sichergestellt ist, dass die von der Datenverarbeitungsvorrichtung bei Bedarf benötigte Energie aus dem zu begrenzenden Strom entnommen werden kann.

Durch die vom zu begrenzenden Strom durchflossene Spule des Kurzschlussstromauslösers ist ein Backup-Schutz für den Fall sichergestellt, dass der elektronische Überstromauslöser funktionsuntüchtig ist.

Das Strombegrenzungsverhalten des Schalters nach der Erfindung kann durch einen in Reihe mit der Spule und einer Schaltstelle des Schalters liegenden Widerstand, insbesondere einen Kaltleiter, zusätzlich verbessert werden. Als Kaltleiter ist insbesondere ein PTC-Widerstand auf der Basis eines Polymers und eines Füllstoffs, eines Metalls, wie etwa Eisen, Kobalt oder Nickel, einer Eisen, Kobalt und/oder Nickel enthaltenden Legierung oder einer vorzugsweise oxidischen Keramik zu empfehlen.

### KURZE BESCHREIBUNG DER ZEICHNUNGEN

Ein bevorzugtes Ausführungsbeispiel der Erfindung und die damit erzielbaren weiteren Vorteile werden nachfolgend anhand von Zeichnungen näher erläutert. Hierbei zeigt:
- Fig.1: eine als Schaltungsanordnung dargestellte Ausführungsform eines strombegrenzenden Schalters nach der Erfindung, und
- Fig.2: einen axial geführten Schnitt durch eine zylinderförmig ausgebildete Spule eines im Schalter gemäss Fig.1 vorgesehenen Kurzschlussstromauslösers.

### WEGE ZUR AUSFÜHRUNG DER ERFINDUNG

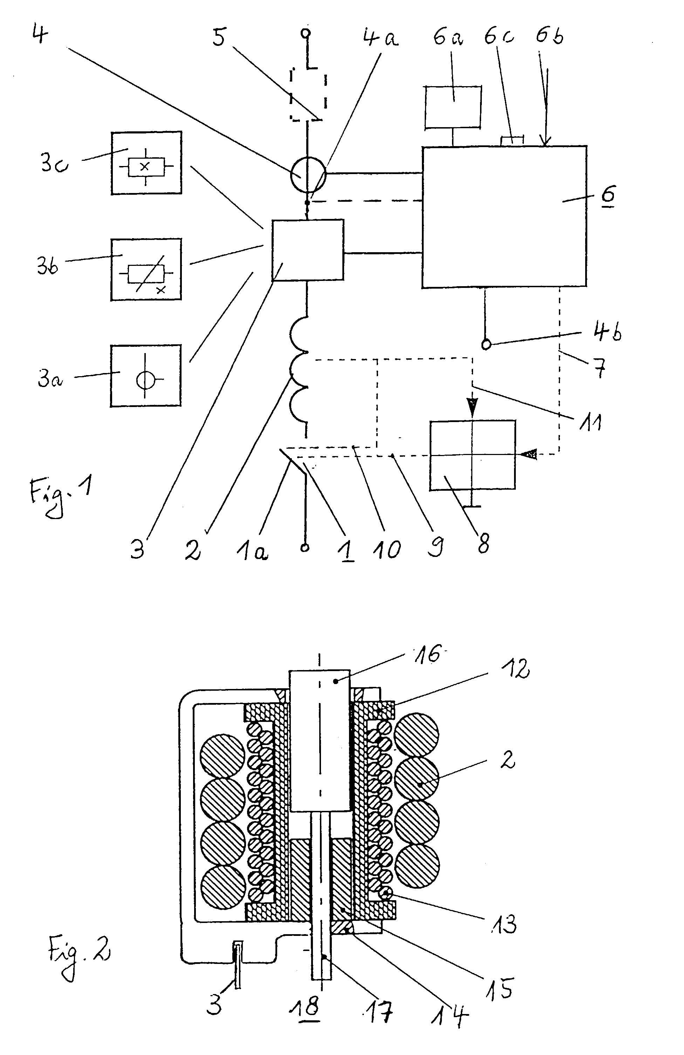

Der in Fig.1 dargestellte strombegrenzende Schalter weist in einem normalerweise Betriebsstrom führenden Hauptstrompfad eine oder mehrere seriell angeordnete Schaltstellen 1 auf sowie einen als Spule 2 dargestellten Kurzschlussstromauslöser, einen Stromsensor 3, einen induktiven Stromwandler 4 mit einem ferromagnetischen Kern und wahlweise und daher gestrichelt dargestellt einen strombegrenzend wirkenden Widerstand 5. Der Widerstand 5 enthält vorteilhafterweise einen Kaltleiter, insbesondere einen PTC-Widerstand auf der Basis eines Polymers und eines Füllstoffs, eines Metalls, wie etwa Eisen, Kobalt oder Nickel, einer Eisen, Kobalt und/oder Nickel enthaltenden Legierung oder einer vorzugsweise oxidischen Keramik.

Der Stromsensor 3 überträgt praktisch keine Energie und weist daher zumindest bis zu einem durch den Ansprechwert des Kurzschlussstromauslösers bestimmten Grenzwert eine im wesentlichen lineare Übertragungskennlinie auf. Mit Vorteil ist der Stromsensor 3 Teil eines (ferromagnetikumfreien) Strom-Spannungswandlers mit einer vorzugsweise als Rogowskispule 3a ausgebildeten Sekundärwicklung. Alternativ kann der Stromsensor 3 auch ein magneffeldabhängiger Widerstand 3b oder ein Hallelement 3c sein. Mit diesen Sensoren können auch Gleichströme detektiert werden.

In jedem Fall ist der Ausgang des Sensors 3 ist mit einem Eingang eines elektronischen Überstromauslösers 6 verbunden. Der Ausgang des Stromwandlers 4 ist mit einem weiteren Eingang des Überstromauslösers verbunden und speist beim Fliessen von Strom im genannten Strompfad Energie in den Überstromauslöser 6 ein. Der Überstromauslöser 6 kann so unabhängig von einer zusätzlichen Stromquelle mit einer zum Betrieb seiner Elektronik notwendigen Spannung versorgt werden. Für den Fall, dass der Schalter in einem Gleichstromnetz eingesetzt ist, kann anstelle eines induktiven Stromwandlers 4 als Stromquelle ein mit dem Pluspol der Gleichstromquelle verbundener Abgriffpunkt 4a mit einer gestrichelt dargestellten Wirkverbindung vorgesehen sein, an welchen die Netzspannung angelegt ist. Der Schalter weist dann einen an den Überstromauslöser 6 geführten und mit dem Minuspol der Gleichstromquelle verbundenen Anschluss 4b auf. Der Überstromauslöser wirkt über einen lediglich als Wirklinie dargestellten Aktor 7, beispielsweise einen Magnetauslöser, auf ein Schaltschloss 8 ein. Das Schaltschloss ist mit einem lediglich als Wirklinie dargestellten Antrieb 9 kraftschlüssig mit einem beweglichen Kontakt 1a der Schaltstelle 1 verbunden. Die Spule 2 wirkt einerseits direkt (Wirklinie 10) und andererseits über das Schaltschloss 8 indirekt (Wirklinie 11) auf den beweglichen Kontakt 1a der Schaltstelle.

Der elektronische Überstromauslöser 6 enthält eine Datenverarbeitungsvorrichtung, typischerweise einen Mikroprozessor, mit einem nichtflüchtigen Speicher 6a zur Aufnahme schalterspezifischer technischer Daten, wie insbesondere eines oder mehrer Bemessungsströme sowie von Parametern zur Bildung einer oder mehrerer Auslösekennlinien. Diese schalterspezifischen Daten werden bei der Fertigung des Schalters mit einem geeigneten Programmiergerät 6b eingegeben und gegen unberechtigten Zugriff gesichert im Speicher 6a abgelegt. Mit einem Kodierschalter 6c kann der Anwender die für eine spezielle Anwendung erwünschten schalterspezifischen Daten, insbesondere den erwünschten Bemessungsstrom und die erwünschte Auslösekennlinie, einstellen.

Alternativ kann in der Datenverarbeitungsvorrichtung ein Steuerprogramm abgelegt sein, welches in Abhängigkeit von einem vom Stromsensor 3 abgegebenen Steuersignal eine selbsttätige Umschaltung von einer aktivierten der in der Datenverarbeitungsvorrichtung abgespeicherten Auslösekennlinien auf eine andere dieser Kennlinien bewirkt. Bei einem mehrphasig ausgebildeten Schalter mit einer der Anzahl der Phasen entsprechenden Anzahl an Stromsensoren werden dann eine der Anzahl der Phasen entsprechende Anzahl an Steuersignalen an den Überstromauslöser 6 geführt. Weicht beispielsweise eine der Phasen in ihrem Verhalten von den übrigen Phasen ab, führt sie beispielsweise wegen eines Leiterunterbruchs einen erheblich geringeren Strom als jede der übrigen Phasen, so wird oberhalb eines durch das Verhältnis Strom in gesunder Phase zu Strom in kranker Phase definierten Grenzwertes, von der aktiven Auslösekennlinie auf eine andere der eingespeicherten Kennlinien umgeschaltet.

Die Eingabe der Daten kann über galvanische Kontakte erfolgen, welche das Programmiergerät 6b mit einem nicht dargestellten Datenbus der Datenverarbeitungsvorrichtung verbinden. Ein galvanischer Anschluss ist jedoch entbehrlich, wenn in der Datenverarbeitungsvorrichtung ein auf den Datenbus wirkender und vorzugsweise als Antenne ausgebildeter Empfänger vorgesehen ist, welcher vom Programmiergerät 6b abgegebene, schalterspezifische Daten empfängt und zur Verarbeitung an eine zentrale Steuer- und Verarbeitungseinheit weiterleitet. Werden die schalterspezifischen Daten unabhängig von galvanischen Kontakten eingegeben, so entfallen bestimmte Montageschritte und kann so die Fertigungsgeschwindigkeit erheblich gesteigert und der Fertigungsprozess in einfacher Weise automatisiert werden.

Wegen der linearen Übertragungskennlinie sind die Ausgangssignale des Stromsensors 3 gut an die Arbeitsweise der Datenverarbeitungsvorrichtung angepasst, so dass selbst komplizierte Schutzaufgaben rasch und mit guter Genauigkeit gelöst werden können. Von besonderem Vorteil ist es, dass in einem ganzen Schaltersortiment mit Bemessungsströmen zwischen 0,1 A und 180 A und unterschiedlichen Auslösekennlinien lediglich ein einziger Typ von Überstromauslösern benötigt wird und lediglich einige wenige Typen von Kurzschlussstromauslösern benötigt werden. Die im Überstromauslöser 6 gespeicherten Auslösekennlinien können den Bereich von kleinen Überströmen bis hin zu Kurzschlussströmen umfassen. Den eingestellten Bereich überschreitende Kurzschlussströme werden bei defektem oder nicht defektem Überstromauslöser 6 durch den Kurzschlussstromauslöser begrenzt. Der Kurzschlussstromauslöser wirkt bei defektem Überstromauslöser 6 wie ein zusätzlicher Backup-Schutz.

Der Kurzschlussstromauslöser ist in Fig.2 dargestellt. Er ist derart ausgebildet, dass er in einem zwischen 0,1 A und einem oberen Grenzwert liegenden unteren Bereich oder einem zwischen einem unteren Grenzwert und 180 A liegenden oberen Bereich mit Betriebsströmen belastbar ist. Typischerweise liegt der obere Grenzwert zwischen 25 und 125 A und der untere Grenzwert zwischen 40 und 140 A. Der obere und der untere Grenzwert können gleich sein und beispielsweise 80 A betragen. Es sind dann lediglich zwei unterschiedlich mit Betriebsströmen belastbare Kurzschlussstromauslöser im Schaltersortiment vorgesehen. Alternativ kann zwischen dem unteren und dem oberen Bereich mindestens ein dritter Bereich angeordnet ist. Es sind dann im Schaltersortiment mindestens drei unterschiedlich mit Betriebsströmen belastbare Kurzschlussstromauslöser vorgesehen. Typischerweise liegt der obere Grenzwert dann zwischen 25 und 63 A und der untere Grenzwert zwischen 40 und 100 A.

Er enthält in koaxialer Anordnung eine hohlzylinderförmige Hülse 12 aus Isoliermaterial, eine auf der Aussenfläche der Hülse 12 aufliegende, mehrlagige Sekundärwicklung 13 des Stromwandlers 4 und die die Sekundärwicklung umfassende Spule 2. Die Sekundärwicklung kann aus Draht hergestellt sein, kann aus fertigungstechnischen Gründen aber auch durch einen lithographischen Prozess in die Hülse 12 integriert sein. Da die Spule 2 dann unmittelbar auf der Hülse 12 gelagert werden kann, lässt sich der Kurzschlussstromauslöser besonders platzsparend ausbilden.

Ein ferromagnetisches Joch 14 umgibt die Spule 2. Dieses Joch 14 trägt an seiner Unterseite einen ins Innere der Hülse 12 geführten Kern 15 aus ferromagnetischem Material. Das Joch 14 weist an seiner Ober- und an seiner Unterseite jeweils eine auf der Hülsenachse angeordnete Öffnung auf. Durch die obere Öffnung ist ein in der Hülse gleitend gelagerter Anker 16 aus ferromagnetischem Material geführt. Am Anker 16 ist ein auf der Hülsenachse gehaltener und durch die untere Öffnung des Jochs geführter Stift 17 aus Isoliermaterial befestigt. Anker 16 und Stift 17 bilden einen beim Ansprechen des Kurzschlussstromauslösers gegen den beweglichen Kontakt 1a geführten Schlaganker 18. Im Joch 14 ist ein Schlitz vorgesehen, in dem der Stromsensor 3, insbesondere in Form des Hallelements 3c oder der magnetischen Feldplatte 3b, eingebaut ist.

Die Wirkungsweise des Schalters gemäss Fig. 1 ist wie folgt:
Bei normalem Betrieb ist die Schaltstelle 1 geschlossen und fliesst Gleich- oder Wechselstrom im Hauptstrompfad. Die vom Hauptstrompfad gespeiste und als Abgriffpunkt 4a (Gleichstrom) oder als induktiver Stromwandler 4 (Wechselstrom) ausgebildete Stromquelle versorgt den elektronischen Überstromauslöser 6 mit Strom, so dass der Überstromauslöser 6 nun die vom Stromsensor 3 gelieferten Messdaten verarbeiten kann.

Beim Auftreten von Überströmen oder verhältnismässig kleinen Kurzschlussströmen bildet der Überstromauslöser 6 nach Vergleich der zugeführten Messdaten mit den Parametern der aktuell gespeicherten Auslösekennlinie ein Auslösesignal, welches über den Aktor 7 auf das Schaltschloss 8 wirkt. Das Schaltschloss 8 wird entklinkt und öffnet sodann die Schaltstelle 1 über den Antrieb 9.

Beim Auftreten eines grossen Kurzschlussstroms führen das von der Spule 2 gespeiste Joch 14 und der den Kern 15 und den Anker 16 enthaltende Pfad einen grossen magnetischen Fluss. Oberhalb eines Stromgrenzwertes wird der Anker 16 ins Innere der Hülse 12 gezogen und schlägt dann der mit ihm verbundene Stift 18 auf den beweglichen Kontakt 1a auf. Die Schaltstelle 1 wird so innerhalb von ca. 2 bis 3 ms geöffnet und der grosse Kurzschlussstrom sehr rasch begrenzt, ohne dass der Schalter eine grosse Energiemenge aufnehmen muss. Das über den Überstromauslöser 6 gleichzeitig angesteuerte, aber langsamer reagierende Schaltschloss 8 wirkt danach über den Antrieb 9 auf die Schaltstelle 1 und hält diese permanent geöffnet.

In Fig.1 ist der strombegrenzende Schalter einpolig ausgeführt. Alternativ kann der Schalter auch mehrpolig ausgebildet sein und beispielsweise drei Phasen und einen Neutralleiter enthalten. Jeder Phase ist dann ein Stromsensor zur Erfassung der Grösse des Stroms und eine als Stromwandler oder Abgriffpunkt an einem Potentiometer ausgebildete Stromquelle zur Versorgung des Überstromauslösers mit Energie zugeordnet, die jeweils mit einem von sechs Eingängen des Überstromauslösers verbunden sind. Ein solcher mehrpoliger Schalter ist in einfacher Weise wirksam gegen den Ausfall einer Phase geschützt. Zusätzlich kann der Neutralleiter mit Hilfe eines vierten Stromsensors überwacht werden.

### BEZUGSZEICHENLISTE

- 1: Schaltstelle
- 1a: beweglicher Kontakt
- 2: Spule
- 3: Stromsensor
- 3a: Rogowskispule
- 3b: magnetfeldabhängiger Widerstand
- 3c: Hallelement
- 4: induktiver Stromwandler
- 4a: Abgriffpunkt
- 4b: Anschluss
- 5: Widerstand
- 6: Überstromauslöser
- 6a: nichtflüchtiger Speicher
- 6b: Programmiergerät
- 6c: Kodierschalter
- 7: Aktor
- 8: Schaltschloss
- 9: Antrieb
- 10, 11: Wirklinien
- 12: Hülse
- 13: Sekundärwicklung
- 14: Joch
- 15: Kern
- 16: Anker
- 17: Stift
- 18: Schlaganker

## Patentansprüche

1. Strombegrenzender Schalter mit
mindestens einer den zu begrenzenden Strom führenden Schaltstelle (1),
einem mit einem beweglichen Kontakt (1a) der mindestens einen Schaltstelle (1) zusammenwirkenden Schaltschloss (8),
einem Kurzschlussstromauslöser mit einer vom zu begrenzenden Strom durchflossenen Spule (2) und einem Schlaganker (18), welcher einerseits direkt und andererseits über das Schaltschloss (8) auf den beweglichen Kontakt (1a) wirkt,
einem mit dem Schaltschloss (8) zusammenwirkenden elektronischen Überstromauslöser (6),
einem den zu begrenzenden Strom erfassenden und auf den Überstromauslöser (6) mit Steuersignalen wirkenden Stromsensor (3) und mit
einer vom zu begrenzenden Strom gespeisten und den Überstromauslöser (6) mit Energie versorgenden Stromquelle,
dadurch gekennzeichnet, dass der Überstromauslöser (6) eine Datenverarbeitungsvorrichtung enthält mit einem Speicher (6a) zur Aufnahme schalterspezifischer, bei der Fertigung des Schalters eingegebener, technischer Daten, wie insbesondere eine Auslösekennlinie, dass der Stromsensor (3) zumindest bis zu einem durch den Ansprechwert des Kurzschlusstromauslösers bestimmten Grenzwert eine im wesentlichen lineare Übertragungskennlinie aufweist, und
dass der Kurzschlussstromauslöser derart ausgebildet ist, dass er in einem zwischen 0,1 A und einem oberen Grenzwert liegenden unteren Bereich oder einem zwischen einem unteren Grenzwert und 180 A liegenden oberen Bereich mit Betriebsströmen belastbar ist.

2. Schalter nach Anspruch 1, dadurch gekennzeichnet, dass der obere und der untere Grenzwert gleich sind.

3. Schalter nach Anspruch 1, dadurch gekennzeichnet, dass der obere Grenzwert zwischen 25 und 125 A und der untere Grenzwert zwischen 40 und 140 A liegt.

4. Schalter nach einem der Ansprüche 1 oder 3, dadurch gekennzeichnet, dass zwischen dem unteren und dem oberen Bereich mindestens ein dritter Bereich vorgesehen, in dem der Kurzschlussstromauslöser mit Betriebsströmen belastbar ist.

5. Schalter nach Anspruch 4, dadurch gekennzeichnet, dass der obere Grenzwert zwischen 25 und 63 A und der untere Grenzwert zwischen 40 und 100 A liegt.

6. Schalter nach einem der Ansprüche 1 bis 5, dadurch gekennzeichnet, dass in der Datenverarbeitungsvorrichtung ein Steuerprogramm abgelegt ist, welches in Abhängigkeit von mindestens einem der Steuersignale eine selbsttätige Umschaltung von der in der Datenverarbeitungsvorrichtung abgespeicherten Auslösekennlinie auf eine in der Datenverarbeitungsvorrichtung abgespeicherte weitere Auslösekennlinie bewirkt.

7. Schalter nach Anspruch 6, dadurch gekennzeichnet, dass bei einem mehrphasig ausgebildeten Schalter mindestens eine der Anzahl der Phasen entsprechende Anzahl an Steuersignalen die Umschaltung bewirken.

8. Schalter nach einem der Ansprüche 1 bis 7, dadurch gekennzeichnet, dass der Stromsensor Teil eines Strom-Spannungswandlers ist.

9. Schalter nach Anspruch 8, dadurch gekennzeichnet, dass der Sensor eine Rogowskispule (3a) ist.

10. Schalter nach Anspruch 8, dadurch gekennzeichnet, dass der Stromsensor als Hallelement (3c) oder als magnetfeldabhängiger Widerstand (3b) ausgebildet ist.

11. Schalter nach einem der Ansprüche 1 bis 10, dadurch gekennzeichnet, dass die Datenverarbeitungsvorrichtung einen vorzugsweise als Antenne ausgebildeten Empfänger zur Aufnahme der von einem externen Programmiergerät abgegebenen schalterspezifischen, technischen Daten aufweist.

12. Schalter nach einem der Ansprüche 1 bis 11, dadurch gekennzeichnet, dass in Reihe mit der mindestens einen Schaltstelle (1) und der Spule (2) des Kurzschlussstromauslösers ein vorzugsweise als Kaltleiter ausgebildeter strombegrenzender Widerstand (5) angeordnet ist.

13. Schalter nach einem der Ansprüche 1 bis 12, dadurch gekennzeichnet, dass die Stromquelle als induktiver Stromwandler (4) oder als Abgriffpunkt (4a) ausgebildet ist.

14. Schalter nach einem der Ansprüche 1 bis 13, dadurch gekennzeichnet, dass der Stromsensor (3) und/oder die Stromquelle (4) in den Kurzschlussstromauslöser eingebaut sind.

15. Schalter nach Anspruch 14, dadurch gekennzeichnet, dass der Kurzschlussstromauslöser in koaxialer Anordnung die vom zu begrenzenden Strom durchflossene Spule (2) und eine von dieser Spule (2) umfasste Sekundärwicklung (13) eines die Stromquelle bildenden Stromwandlers (4) aufweist.

16. Schalter nach Anspruch 15, dadurch gekennzeichnet, dass die Sekundärwicklung durch einen lithographischen Prozess in eine zum Tragen der Spule vorgesehene Hülse (12) des Kurzschlussstromauslösers integriert ist.

17. Schalter nach einem der Ansprüche 14 bis 16, dadurch gekennzeichnet, dass ein die Spule (2) umgebendes Joch (14) aus ferromagnetischem Material mindestens einen der Aufnahme des Stromsensors (3) dienenden Schlitz aufweist.

18. Schalter nach Anspruch 17, dadurch gekennzeichnet, dass der Sensor ein Hallelement (3c) oder eine magnetische Feldplatte (3b) ist.
